# EUROPÄISCHE PATENTSCHRIFT

(11) **EP 0 456 239 B1**
(45) Veröffentlichungstag und Bekanntmachung des Hinweises auf die Patenterteilung: **01.03.1995**
(21) Anmeldenummer: 91107542.2
(22) Anmeldetag: 08.05.1991
(51) Int. Cl.: B60L 15/00

(54) **Verfahren zur stromlosen Umschaltung von Speiseabschnitten von Langstatormotoren bei Versorgung aus einem Frequenzumrichter**
Method for electroless changeover switching of supply-segments of long stator motors supplied through a frequency converter
Méthode pour commutation sans courant de l'alimentation segmenté des moteurs à stator oblong par alimentation d'un convertisseur de fréquence

(30) Priorität: 09.05.1990 DE 4014848
(43) Veröffentlichungstag der Anmeldung: 13.11.1991
(73) Patentinhaber: Magnetbahn GmbH, D-82319 Starnberg (DE)
(72) Erfinder: Hoffmann, Bernhard, Dipl.-Ing., W-8130 Starnberg (DE); Nipper, Bernhard, Dipl.-Ing., W-3300 Braunschweig (DE); Wolff, Dieter, Dipl.-Ing., W-3380 Goslar 1 (DE)
(74) Vertreter: Vogl, Leo, Dipl.-Ing.

(56) Entgegenhaltungen:
- DE-A- 3 317 964
- DE-A- 3 909 706
- PATENT ABSTRACTS OF JAPAN vol. 9, no. 102 (E-312)(1825) 04 Mai 1985 & JP-A-59 226 689
- ELEKTRISCHE BAHNEN. vol. 86, no. 8, August 1988, München DE, Seiten 256-260; B. HOFFMANN : "Dezentrale Energieversorgung für den Langstatorantrieb-Weiterentwicklungspotential für die M-Bahn"

## Beschreibung

Die vorliegende Erfindung bezieht sich auf ein Verfahren nach dem Oberbegriff des Anspruchs 1.

Bei einem elektromagnetischen Linearantrieb, der aus einem Langstator und einem als Fahrzeug ausgebildeten Läufer besteht, wird der Langstator üblicherweise in mehrere Speiseabschnitte unterteilt. Aus Kostengründen werden nur diejenigen Abschnitte über Frequenzumrichter mit Energie versorgt auf dem sich gerade Fahrzeuge befinden. Bisher ist es üblich, zur Versorgung aufeinanderfolgender Speiseabschnitte mehrere Frequenzumrichter zu verwenden und die entsprechenden Abschnitte Zu- und Wegzuschalten, wenn das Fahrzeug den betreffenden Abschnitt gerade noch nicht erreicht bzw. gerade schon wieder verlassen hat. Dieses Verfahren benötigt aber eine Vielzahl von Frequenzumrichtern und erhöhten Verkabelungsaufwand. Weiterhin ist aus der DE OS 3317964.7 bekannt, mit einem einzigen Frequenzumrichter mehrere aufeinanderfolgende Speiseabschnitte zu versorgen und zwar derart, daß mittels Hybridschützen die einzelnen Abschnitte unter Last, d. h. wenn die Fahrzeuge den Abschnitt gerade verlassen haben, oder in ihn einfahren, zu- bzw. abgeschaltet werden. Nachteil hierbei sind die hohen Kosten für die aufwendigen Hybridschütze. Schließlich ist aus der DE-A-3 909 706 eine Speiseschaltung für einen von einem einzigen Frequenzumformer betriebenen Linearmotor bekannt, die das stromlose Öffnen der den längs der Fahrbahn angeordneten einzelnen Statorabschnitten zugeordneten Schalter ermöglicht, durch Betätigung von speziellen, zwischen den Stromzuführungen vorgesehenen Kurzschlußschaltern.

Der Erfindung liegt daher die Aufgabe zugrunde, mit einem einzigen Frequenzumrichter mehrere aufeinanderfolgende Speiseabschnitte eines Langstatormotors mit einfach aufgebauten und preiswerten Schützen zu versorgen. Die Lösung der Aufgabe ist Anspruch 1 zu entnehmen. Vorteilhafte Weiterbildungen sind den Unteransprüchen zu entnehmen. Werden Schützspulen mit Wechselstrom angesteuert, so sind die Ansprechzeiten verschieden lang je nachdem welche Amplitude der Speisestrom wegen der Phasenlage gerade besitzt. Deshalb werden bei der vorliegenden Erfindung die Schützspulen vorzugsweise mit Gleichstrom mit großer Amplitude betätigt, um möglichst kurze und gleichmäßige Ansprechzeiten zu erreichen. Hierzu wird ein ausreichend groß dimensionierter Kondensator auf den Scheitelwert der Versorgungswechselspannung aufgeladen. Beim Einschaltbefehl wird die Kondensatorspannung zum schnellen Anziehen des Schützes auf die Schützspule gegeben, gleichzeitig wird eine Gleichstromquelle zum Halten des Schützes zugeschaltet.

Die Schütze werden bei bestimmungsgemäßem Betrieb nur dann betätigt, wenn der versorgende Pulswechselrichter ausgetastet ist und die Schaltung stromlos erfolgt. Fällt jedoch die Versorgungsspannung der Schützspulen bei weiterhin vorhandenem Strom aus dem Pulswechselrichter aus, so fällt das gerade eingeschaltete Schütz zwangsläufig ab und es entsteht ein Lichtbogen. Deshalb wird vorzugsweise eine Lichtbogenüberwachung eingebaut, die beim Entstehen eines Lichtbogens den Pulswechselrichter austastet und so eine Zerstörung der Kontakte verhindert.

Die Erfindung wird im folgenden anhand der Figuren näher erläutert:
Figur 1 zeigt den Aufbau einer Langstatorstrecke, die aus mehreren aufeinanderfolgenden Speiseabschnitten besteht.
Figur 2 zeigt den Aufbau einer besonders bevorzugten erfindungsgemäßen Schalteinrichtung.
Figur 3 zeigt einen möglichen Aufbau der Schützansteuerung aus Figur 2.
Figur 4 zeigt den zeitlichen Ablauf eines Abschnittwechsels mit einer Schalteinrichtung nach Figur 2.

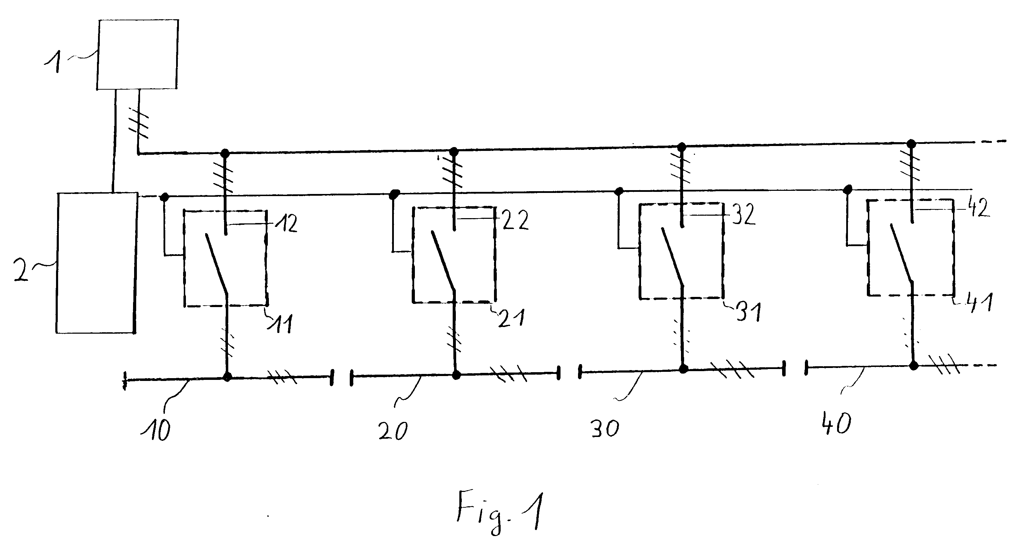

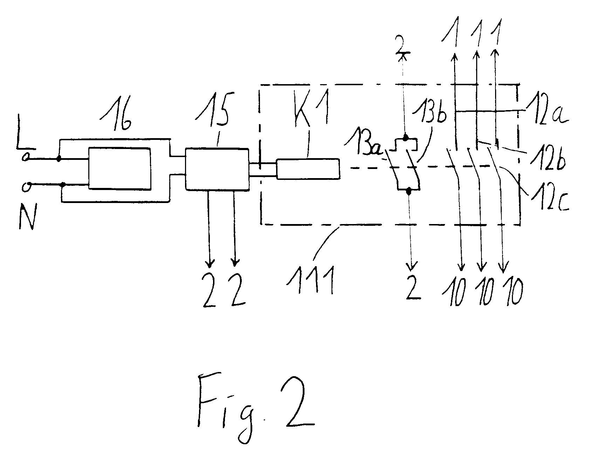

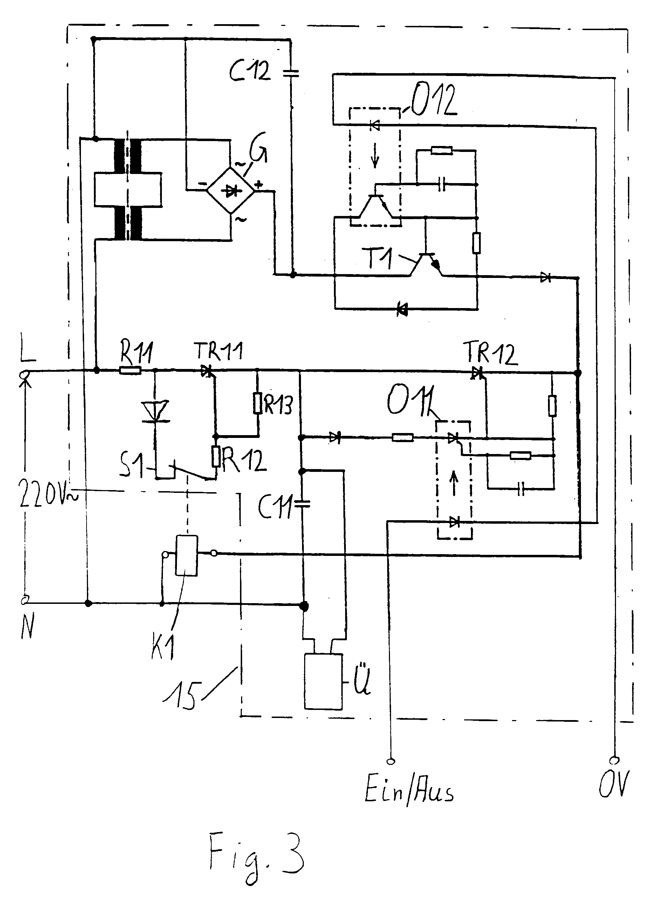

In Figur 1 ist die Langstatorstrecke in aufeinanderfolgende Abschnitte 10, 20, 30 und 40 aufgeteilt. Alle diese Abschnitte werden über die jeweiligen Abschnittschalter 11, 21, 31 und 41 über die jeweiligen dreifachen Hauptkontakte 12, 22, 32 und 42 vom Pulswechselrichter 1 mit Strom mit der vom Läufer benötigten Fequenz- und Phasenlage versorgt. Die Abschnittschalter 11, 21, 31 und 41 und der Pulswechselrichter 1 werden von der Abschnittschaltersteuerung 2 gesteuert. Die Abschnittschaltersteuerung enthält zusätzliche Information über die Lage des Läufers von dem nicht dargestellten Pollageerfassungssystem.

Nun sei beispielsweise angenommen, daß sich nur im Abschnitt 10 ein als Läufer ausgebildetes Fahrzeug befindet und sich in Abschnitt 20 bewegt. Der Pulswechselrichter 1 versorgt den Langstator 10 über den geschlossenen Abschnittschalter 11 mit dem erforderlichen Strom, während die übrigen Abschnittschalter geöffnet sind. Erhält die Abschnittsteuerung 2 die Information, daß das Fahrzeug im Begriff ist, den Langstatorabschnitt 10 zu verlassen und in den Langstatorabschnitt 20 einzufahren, so gibt die Abschnittschaltersteuerung 2 zunächst den Befehl den Pulswechselrichter 1 aus zutasten und dann dem Abschnittschalter 11 den Befehl, die Hauptkontakte 12 zu öffnen und dem Abschnittschalter 21 den Befehl, die Hauptkontakte 22 zu schließen. Dann tastet die Abschnittschaltersteuerung 2 den Pulswechselrichter wieder ein. Somit werden die Schalter ohne Strombelastung geschaltet und es sind für die Abschnittschalter gewöhnliche Drehstromschütze verwendbar, da die Schütze den Strom des Pulswechselrichters, der Frequenzen bis gegen Null erreichen kann, nur führen und nicht schalten müssen. Voraussetzung für einen derartigen Einsatz ist eine schnelle Umschaltung und nur kurze Austastung des Pulswechselrichters, damit das als Läufer ausgebildete Fahrzeug keine ruckartigen Bewegungen ausführt.

Der Pulswechselrichter ist innerhalb weniger Millisekunden ein- und austastbar. Es muß deshalb dafür Sorge getragen werden, daß die Umschaltung der Schalter schnell und reproduzierbar ausgeführt wird. Es ist eine gewisse kurze Zeitspanne zwischen dem Austasten des Pulswechselrichters 1 und dem Öffnen der Hauptkontakte des Abschnittschalters des Abschnitts, der gerade vom Fahrzeug verlassen wird, vorzusehen, um sicher sein zu können, daß der Abschnittschalter ohne Last betätigt wird.

Ebenso gilt dies für das Einschalten des Abschnittschalters und darauffolgende Eintasten des Pulswechselrichters im nächsten zu befahrenden Abschnitt. Man kann diesen zeitlichen Ablauf zum Beispiel durch elektronische Zeitverzögerungsglieder erreichen.

Eine einfache mechanische Lösung zeigt eine besonders bevorzugte Ausgestaltung des für die Erfindung benutzten Schalters in Figur 2. Der Ab-Schnittschalter 11 besteht zunächst aus dem Drehstromschütz 111 mit den Hauptkontakten 12a,b,c, die jeweils eine Phase des Stromes zwischen dem Pulswechselrichter 1 und dem Langstatorabschnitt 10 leiten, den als Spätschließer ausgebildeten Hilfskontakten 13a,b und der Schützspule K1. Die Spätschließer 13 werden bei einem Abfallen des Schützes vor den Hauptkontakten 12 geöffnet und bei einem Anziehen des Schützes nach den Hauptkontakten 12 geschlossen. Weiterhin enthält der Abschnittschalter 11 die Schützansteuerung 15 und das Netzteil 16.

Die Abschnittschalter 21, 31 und 41 sind ebenso aufgebaut. Deren Numerierung entspricht der von Abschnittschalter 11 mit der Ausnahme, daß die erste Ziffer des entsprechenden Abschnittschalters und der des entsprechenden Bauteils übereinstimmt, so daß z. B. bei Abschnittschalter 21 die Hilfskontakte mit 23a,b und die Schützspule mit K2 bezeichnet sind.

In Figur 3 ist eine bevorzugte Schützansteuerung 15 aus Figur 2 und die Schützspule K1 dargestellt. Der Einschaltkondensator C11 wird über den Widerstand R11 und den Thyristor TR11 auf den Scheitel der Versorgungsspannung geladen. Der Gleichrichter G erzeugt eine Gleichspannung, die mit dem Kondensator C12 geglättet wird. Wird an den Ein/Aus-Anschluß positive Einschaltspannung von der Abschnittschaltersteuerung gelegt, so werden der Thyristor TR12 und der Transistor T1 über die Optokoppler 011 und012 durchgeschaltet: Die Schützspule K1 erhält die Spannung des Kondensators C11 zugeführt, zieht an und wird von der Gleichspannung aus dem Gleichrichter G gehalten. Wenn die Schützspule K1 vollständig angezogen hat, ist der Schalter S1 geöffnet, so daß der Einschaltkondensator nicht weiter über den Thyristor CR11 geladen wird, das Schütz bleibt durch die Versorgung mit dem Gleichstrom aus dem Gleichrichter G solange angezogen, wie die positive Einschaltspannung am Ein/Aus-Anschluß vorhanden ist. Die Überwachungsschaltung verhindert ein Anziehen des Schützes bei nicht vollständig aufgeladenem Einschaltkondensator C11.

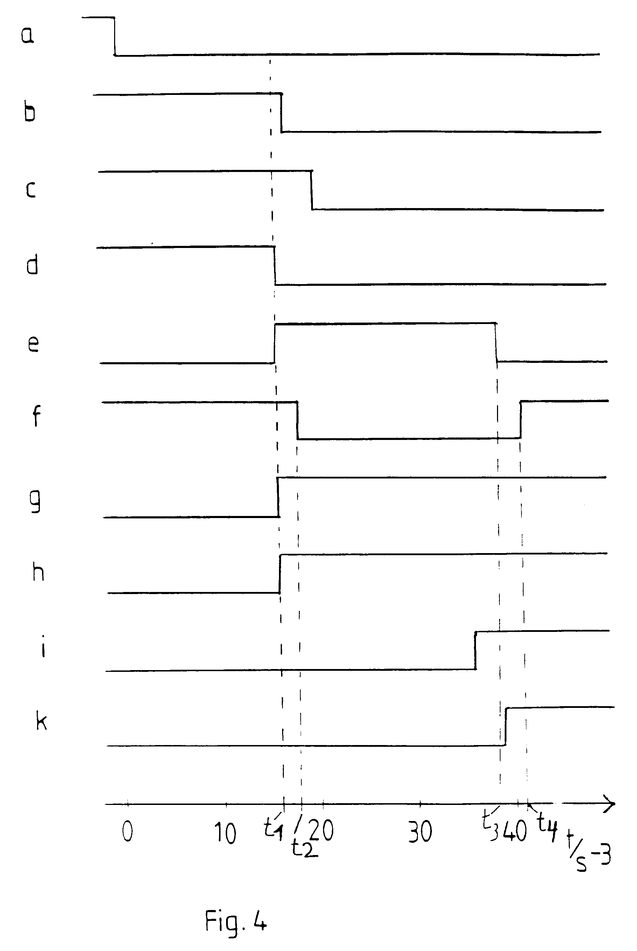

In Figur 4 ist der zeitliche Ablauf eines Abschnittwechsels am Beispiel der Abschnitte 10 und 20 dargestellt. Die einzelnen Graphen haben folgende Bedeutung:
a) Ein/Aussignal der Abschnittschaltersteuerung 2 für Abschnittschalter 11
b) Strom in der Schützspule K1 in Abschnittschalter 11
c) Schaltzustand der Hauptkontakte 12 in Abschnittschalter 11
d) Schaltzustand der Spätschließer 13 in Abschnittschalter 11
e) Schaltung des Pulswechselrichters 1 durch die Abschnittsteuerung 2
f) Strom vom Pulswechselrichter 1 an die Langstatorabschnitte 10, 20
g) Ein/Aussignal der Abschnittsteuerung 2 für Abschnittschalter 21
h) Strom in Schützspule K2 in Abschnittschalter 21
i) Schaltzustand der Hauptkontakte 12 in Abschnittschalter 21
k) Schaltzustand der Spätschließer 23 in Abschnittschalter 21
Es sei angenommen, daß ein Fahrzeug im Begriff ist, Abschnitt 10 zu verlassen und in Abschnitt 20 einzufahren. Mit der fallenden Flanke des Ein/Aus-Signals in a) für Abschnittschalter 11 wird die Versorgung der Schützspule K1 unterbrochen. Ca. 16 ms später ist der Spulenstrom abgebrochen und das Schütz in Abschnittschalter 11 fällt. Zunächst öffnen die Spätschließer 13 (d) zum Zeitpunkt t1, bevor die Hauptkontakte 12 geöffnet werden (c). Mit dem Öffnen der Spätschließer 13 gibt die Abschnittschaltersteuerung 2 den Befehl zum Austasten des Pulswechselrichters 1 zum Zeitpunkt t1 (e). Kurze Zeit darauf, zum Zeitpunkt t2, fließt kein Pulswechselrichterstrom mehr (f). Gleichfalls mit dem Öffnen der Spätschließer 13 zum Zeitpunkt t1 gibt die Abschnittschaltersteuerung 2 an an Abschnittschalter 21 den Ein/-Befehl (g), gleichzeitig wird der Spulenstrom der Schützspule K2 in Abschnittschalter 21 eingeschaltet (a) und das Schütz in Abschnittschalter 21 zieht an. Ca. 20ms später werden die Hauptkontakte 22 in Abschnittschalter 21 geschlossen (i) und darauf folgen die Spätschließer 23 in Abschnittschalter 21 (k). Zu diesem Zeitpunkt t3 wird der Eintastbefehl für den Pulswechselrichter 1 gegeben (e) und ca. 2 ms später, zum Zeitpunkt t4, liefert der Pulswechselrichter 1 Strom über die geschlossenen Hauptkontakte 22 an Abschnitt 20 (f). Somit ist also sichergestellt, daß die stromversorgungslose Zeit für den Langstator nur ca. 20 ms beträgt und gleichzeitig die Hauptkontakte ohne Last geschaltet werden können. Bei dem den folgenden Abschnittswechseln wird sinngemäß verfahren.

## Patentansprüche

1. Verfahren zur Umschaltung von aufeinanderfolgenden Speiseabschnitten von Langstatormotoren, bei Versorgung über Schütze aus einem Frequenzumrichter, dadurch gekennzeichnet, daß beim Wechsel des Läufers vom ersten auf den zweiten Speiseabschntt zunächst der Frequenzumrichter ausgetastet wird,
dann die Hauptkontakte des Versorgungsschützes für den ersten Speiseabschnitt geöffnet und die Hauptkontakte des Versorgungsschützes für den zweiten Speiseabschntt geschlossen werden und
dann wird erst wieder der Frequenzumrichter eingetastet.

2. Verfahren nach Anspruch 1, dadurch gekennzeichnet,
daß ein oder mehrere Hilfskontakte des ersten Versorgungsschützes kurze Zeit vor dem Öffnen der Hauptkontakte ein Signal zum Austasten des Frequenzumrichters abgeben, daß ein oder mehrere Hilfskontakte des zweiten Versorgungsschützes kurze Zeit nach dem Schließen der Hauptkontakte des zweiten Versorgungsschützes ein Signal zum Eintasten des Frequenzumrichters abgeben.

3. Verfahren nach Anspruch 1 oder 2 dadurch gekennzeichnet,
daß die Spulen der Schütze mit Gleichstrom versorgt werden, um gleichmäßigere una kürzere Schaltzeiten zu erreichen.

4. Verfahren nach Anspruch 3 dadurch gekennzeichnet,
daß zunächst ein Einschaltkondensator (C11) auf den Scheitelwert der Versorgungswechselspannung geladen wird und diese Ladung zum schnellen und gleichmäßigen Anziehen des Schützes (111) benutzt wird.

5. Verfahren nach Anspruch 4, dadurch gekennzeichnet,
daß zum Halten des angezogenen Schützes (111) Gleichspannung aus dem Gleichrichter (G) verwendet wird.

6. Verfahren nach einem der vorhergehenden Ansprüche, dadurch gekennzeichnet,
daß eine Überlastschutzeinrichtung vorgesehen ist, die bei Entstehen von Lichtbögen an den Hauptkontakten (12) den Pulswechselrichter (1) austastet.

## Claims

1. Method for the switching-over of successive feed sections of linear stator motors in the case of supply from a frequency converter by way of relays, characterised thereby, that on a change of the rotor from the first to the second feed section, the frequency converter is cut out initially, then the main contacts of the supply relay for the first feed section are opened and the main contacts of the supply relay for the second feed section are closed and only then is the frequency converter cut in again.

2. Method according to claim 1, characterised thereby, that one or more auxiliary contacts of the first supply relay a short time before the opening of the main contacts deliver a signal for the cutting-out of the frequency converter and that one or more auxiliary contacts of the second supply relay a short time after the closing of the main contacts of the second supply relay deliver a signal for the cutting-in of the frequency converter.

3. Method according to claim 1 or 2, characterised thereby, that the coils of the relays are supplied with direct current in order to achieve more uniform and shorter switching times.

4. Method according to claim 3, characterised thereby, that a starting capacitor (C11) is initially charged to the peak value of the alternating supply voltage and this charge is used for the rapid and uniform attraction of the relay (111).

5. Method according to claim 4, characterised thereby, that direct voltage from the rectifier (G) is used for the holding of the attracted relay (111).

6. Method according to one of the preceding claims, characterised thereby, that an overload protection equipment is provided, which in the case of arcs arising at the main contacts (12) cuts out the pulse converter (1).

## Revendications

1. Procédé pour commuter des tronçons d'alimentation successifs de moteurs linéaires à stator long alimenté à travers des contacteurs à partir d'un convertisseur de fréquence, caractérisé en ce que, au passage de l'induit du premier au deuxième tronçon d'alimentation, le convertisseur de fréquence est coupé d'abord, les contacts principaux du contacteur d'alimentation du premier tronçon d'alimentation sont ouverts et les contacts principaux du contacteur d'alimentation pour le deuxième tronçon d'alimentation sont fermés ensuite et le convertisseur de fréquence est réenclenché ensuite seulement.

2. Procédé selon la revendication 1, caractérisé en ce qu'un ou plusieurs contacts auxiliaires du premier contacteur d'alimentation délivrent un signal pour la coupure du convertisseur de fréquence peu de temps avant l'ouverture des contacts principaux et qu'un ou plusieurs contacts auxiliaires du deuxième contacteur d'alimentation délivrent un signal pour l'enclenchement du convertisseur de fréquence peu de temps après la fermeture des contacts principaux du deuxième contacteur d'alimentation.

3. Procédé selon la revendication 1 ou 2, caractérisé en ce que les bobines des contacteurs sont alimentées en courant continu afin d'obtenir des temps de commutation plus uniformes et plus courts.

4. Procédé selon la revendication 3, caractérisé en ce qu'un condensateur d'enclenchement (C11) est chargé d'abord à la valeur de crête de la tension alternative d'alimentation et cette charge est utilisée en vue d'une attraction rapide et uniforme du contacteur (111).

5. Procédé selon la revendication 4, caractérisé en ce que la tension continue du redresseur (G) est utilisée pour maintenir le contacteur (111) à l'état attiré.

6. Procédé selon une des revendications précédentes, caractérisé en ce qu'un dispositif de protection contre les surcharges est prévu, dispositif qui coupe l'onduleur à impulsions (1) lorsque des arcs sont formés sur les contacts principaux (12).
